(19) Europäisches Patentamt
European Patent Office
Office européen des brevets

(11) **EP 3 143 506 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
***G06F 11/16*** *(2006.01)*    ***G05B 19/042*** *(2006.01)*

(21) Anmeldenummer: **15745429.9**

(86) Internationale Anmeldenummer:
**PCT/EP2015/067031**

(22) Anmeldetag: **24.07.2015**

(87) Internationale Veröffentlichungsnummer:
**WO 2016/016135 (04.02.2016 Gazette 2016/05)**

(54) **VERFAHREN UND SYSTEM ZUM ZUWEISEN EINER STEUERBERECHTIGUNG ZU EINEM RECHNER**

METHOD AND SYSTEM FOR ASSIGNING A CONTROL AUTHORIZATION TO A COMPUTER

PROCÉDÉ ET SYSTÈME PERMETTANT D'ATTRIBUER UNE AUTORISATION DE COMMANDE À UN ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2014 DE 102014214974**

(43) Veröffentlichungstag der Anmeldung:
**22.03.2017 Patentblatt 2017/12**

(73) Patentinhaber: **Siemens Aktiengesellschaft 80333 München (DE)**

(72) Erfinder:
• **ARMBRUSTER, Michael 80339 München (DE)**
• **NIEDERMEIER, Christoph 80999 München (DE)**
• **SAWALLISCH, Jan 81379 München (DE)**

(56) Entgegenhaltungen:
**EP-A1- 1 860 564    EP-A1- 2 657 797 US-A- 5 870 301    US-A1- 2005 097 165**

EP 3 143 506 B1

**Beschreibung**

Die Erfindung betrifft ein Verfahren und ein System zum Zuweisen einer Steuerberechtigung zu einem Rechner mithilfe eines Master-Slave-Auswahlverfahrens.

Systeme können eine Vielzahl unterschiedlicher Komponenten umfassen. Zur Steuerung von Komponenten werden als Steuerungseinheiten Rechner eingesetzt, die Steuerungsdaten liefern können. Diese Rechner können eine oder mehrere Applikationen bzw. Anwendungsprogramme ausführen, welche zur Steuerung von Systemkomponenten des betreffenden Systems Steuerdaten liefern. Die zu steuernden Komponenten umfassen dabei Aktoren bzw. Aktorikkomponenten, die in Abhängigkeit von den erhaltenen Steuerdaten angesteuert werden. Insbesondere in sicherheitskritischen Systemen ist es notwendig, dass die zu steuernde Aktorik ständig und zuverlässig korrekte Steuerdaten erhält. Daher werden in derartigen sicherheitskritischen Systemen meist Steuereinheiten bzw. Steuerrechner redundant vorgesehen. In einem Fahrzeug sind bestimmte Komponenten bzw. Aktoren der Aktorik sicherheitskritisch, sodass es zu keinem Ausfall der Steuerdaten kommen darf. Beispiele für eine derartige sicherheitskritische Aktoreinheit innerhalb eines Fahrzeugs sind Fahrzeugbremsmittel und/oder Fahrzeuglenkungssteuermittel. Sind mehrere Rechner für die Ansteuerung einer derartigen sicherheitskritischen Komponente bzw. sicherheitskritischen Aktorik zuständig, ist es notwendig, eindeutig festzustellen, welcher der redundanten Rechner steuerberechtigt ist bzw. die Aktorik mit Steuerdaten versorgt.

EP 2 657 797 A1 beschreibt ein Verfahren zum Betreiben eines redundanten, mit einem ersten und einem zweiten Teilsystem versehenen Automatisierungssystems, welche während der Steuerung eines technischen Prozesses jeweils ein Steuerprogramm redundant verarbeiten, wobei eines dieser Teilsysteme als Master und das andere Teilsystem als Slave arbeitet und wobei für den Fall, dass der Master ausfällt, der Slave die Funktion des Masters übernimmt.

US 5 870 301 A beschreibt eine Steuervorrichtung, welche eine Master-Steuereinheit und eine Slave-Steuereinheit umfasst, die eine kohärente Information aufrechterhalten.

EP 1 860 564 A1 beschreibt ein Verfahren zum Austausch von Daten auf Basis des OPC-Kommunikationsprotokolls, wobei zumindest ein Bereitschafts-OPC-Server parallel zu einem Master-OPC-Server geschaltet wird.

US 2005/097165 A1 beschreibt ein Verfahren und eine Vorrichtung zum Anordnen einer Redundanz in einem Prozesssteuersystem, welches zumindest eine Client-Vorrichtung, zumindest eine Datenquelle und zumindest eine Server-Vorrichtung aufweist, die einen Datentransfer zwischen der Client-Vorrichtung und der Datenquelle bereitstellt.

Es ist daher eine Aufgabe der vorliegenden Erfindung, ein Verfahren und ein System zur eindeutigen Zuweisung einer Steuerberechtigung zu einem von mehreren Rechnern zu schaffen, mit der Konflikte zwischen den Rechnern hinsichtlich der Ansteuerung einer Komponente sicher vermieden werden.

Diese Aufgabe wird erfindungsgemäß durch ein System mit den in Patentanspruch 1 angegebenen Merkmalen gelöst.

Die Erfindung schafft demnach gemäß einem ersten Aspekt ein System mit zwei asynchronen Rechnern, auf denen jeweils mindestens eine Applikation ausgeführt wird, die Steuerdaten für mindestens eine Aktorik bereitstellt, wobei die bereitgestellten Steuerdaten von einem dazu steuerberechtigten Rechner, der einen Master-Rechnerstatus einnimmt, zu der Aktorik zu deren Steuerung übertragen werden,

wobei die Rechner des Systems über eine Datenschnittstelle in einem Datenaustausch Zustandsdaten und Leistungsdaten zyklisch miteinander austauschen,

wobei die Rechner jeweils auf Basis der in dem Datenaustausch von anderen Rechnern erhaltenen Zustands- und Leistungsdaten und auf Basis der eigenen Zustands- und Leistungsdaten in einer auf dem Rechner ausgeführten Master-Slave-Auswahl einen von dem jeweiligen Rechner selbst einzunehmenden Rechnerstatus als steuerberechtigter oder nicht steuerberechtigter Rechner ermitteln, und,

jedem Rechner des Systems ein zugehöriges Zeitfenster zugewiesen ist, in dem der Rechner zur Vermeidung eines Master-Masterkonflikts einen Masterintermediate-Rechnerstatus einnimmt, wobei die zugewiesenen Zeitfenster für die verschiedenen Rechner des Systems unterschiedlich sind.

Ferner weisen die ausgetauschten Zustandsdaten eines Rechners Statusdaten des Rechners auf, die einen Rechnerstatus des Rechners angeben.

Der Rechnerstatus eines Rechners weist dabei einen Master-Rechnerstatus als steuerberechtigter Rechner, einen Slave-Rechnerstatus als nicht steuerberechtigter Rechner, und

einen Masterintermediate-Rechnerstatus als noch steuerberechtigter Rechner auf.

Bei einer weiteren möglichen Ausführungsform des erfindungsgemäßen Systems sind die den Rechnern zugewiesenen Zeitfenster jeweils größer als eine Zeitspanne, die durch die Asynchronität bei der zyklischen Kommunikation der Rechner untereinander und/oder durch Asynchronität bei einem Startup der Rechner hervorgerufen wird.

Bei einer weiteren möglichen Ausführungsform des erfindungsgemäßen Systems ist eine Zeitdifferenz der beiden Zeitfenster, die zwei verschiedenen Rechnern zugewiesen sind, größer als eine Zeitspanne, die für eine Datentransport-Rückantwort an den jeweils anderen Rechner erforderlich ist.

Bei einer weiteren möglichen Ausführungsform des erfindungsgemäßen Systems nimmt ein Rechner seinen für ihn ermittelten Rechnerstatus erst nach Ablauf eines Bestätigungszeitraums ein.

Bei einer weiteren möglichen Ausführungsform des erfindungsgemäßen Systems ermittelt jeder Rechner des Systems auf Basis der bei dem Datenaustausch mit anderen Rechnern erhaltenen Zustands- und Leistungsdaten und auf Basis der eigenen Zustands- und Leistungsdaten für die anderen Rechner jeweils einen Erwartungs-Rechnerstatus.

Bei einer weiteren möglichen Ausführungsform des erfindungsgemäßen Systems ermitteln die Rechner des Systems jeweils auf Basis der Zustands- und Leistungsdaten sowie auf Basis des von den übrigen Rechnern für den betreffenden Rechner ermit telten Erwartungs-Rechnerstatus einen durch den Rechner selbst einzunehmenden Rechnerstatus bei der auf dem Rechner ausgeführten Master-Slave-Auswahl.

Bei einer weiteren möglichen Ausführungsform des erfindungsgemäßen Systems erfolgt die Ermittlung des durch einen Rechner einzunehmenden Rechnerstatus zusätzlich in Abhängigkeit mindestens eines bei dem Rechner auftretenden Rechner-Interrupts.

Bei diesem Rechner-Interrupt kann es sich vorzugsweise um einen Power-Interrupt handeln.

Bei einer weiteren möglichen Ausführungsform des erfindungsgemäßen Systems ist das System ein redundantes sicherheitskritisches System, insbesondere ein verteiltes System, das ausfallsicher Steuerdaten an mindestens eine Aktorik überträgt.

Bei einer weiteren möglichen Ausführungsform des erfindungsgemäßen Systems überträgt der Rechner, der nach Ablauf seines Bestätigungszeitraums den für ihn ermittelten Master-Rechnerstatus einnimmt, Steuerdaten zu der Aktorik und behält seinen eingenommenen Master-Rechnerstatus so lange bei, bis die auf dem Rechner ausgeführte Master-Slave-Auswahl einen anderen Rechnerstatus für diesen Rechner ermittelt.

Bei einer weiteren möglichen Ausführungsform des erfindungsgemäßen Systems wechselt ein Rechner, der einen Slave-Rechnerstatus eingenommen hat, von diesem eingenommenen Slave-Rechnerstatus in den Master-Rechnerstatus erst dann über, wenn derjenige andere Rechner, der den Master-Rechnerstatus bisher eingenommen hat, einen anderen Rechnerstatus einnimmt und die auf dem betreffenden Rechner ausgeführte Master-Slave-Auswahl für den betreffenden Rechner einen Master-Rechnerstatus ermittelt.

Bei einer weiteren möglichen Ausführungsform des erfindungsgemäßen Systems geben die Zustandsdaten eines Rechners einen Zustand des Rechners an.

Bei einer weiteren möglichen Ausführungsform des erfindungsgemäßen Systems geben die Leistungsdaten eine Performance der auf dem Rechner zur Erzeugung der Steuerdaten mindestens einen ausgeführten Applikation an.

Die Erfindung schafft ferner gemäß einem weiteren Aspekt ein Verfahren zum Zuweisen einer Steuerberechtigung mit den in Patentanspruch 12 angegebenen Merkmalen. Die Erfindung schafft demnach ein Verfahren zum Zuweisen einer Steuerberechtigung zu einem von mehreren asynchronen Rechnern eines Systems, wobei die Steuerberechtigung den Rechner zur Steuerung einer Aktorik berechtigt, wobei das Verfahren die folgenden Schritte aufweist: Ermitteln für jeden Rechner eines durch den jeweiligen Rechner einzunehmenden Rechnerstatus durch eine auf dem jeweiligen Rechner ausgeführte Master-Slave-Auswahl auf Basis der bei einem Datenaustausch von den anderen Rechnern erhaltenen Zustands- und Leistungsdaten und auf Basis der eigenen Zustands- und Leistungsdaten des jeweiligen Rechners, und Zuweisen der Steuerberechtigung zur Steuerung der Aktorik zu demjenigen Rechner, für den in dessen Master-Slave-Auswahl ein Master-Rechnerstatus ermittelt wird.

Im Weiteren werden mögliche Ausführungsformen des erfindungsgemäßen Systems und des erfindungsgemäßen Verfahrens zum Zuweisen einer Steuerberechtigung zu einem Rechner unter Bezugnahme auf die beigefügten Figuren näher erläutert.

Es zeigen:

Fig. 1    ein einfaches Blockschaltbild zur Darstellung eines exemplarischen Ausführungsbeispiels eines erfindungsgemäßen Systems;

Fig. 2    eine schematische Darstellung zur Erläuterung der Funktionsweise des erfindungsgemäßen Verfahrens und des erfindungsgemäßen Systems zur Zuweisung einer Steuerberechtigung;

Fig. 3    ein einfaches Ablaufdiagramm zur Darstellung eines exemplarischen Ausführungsbeispiels eines erfindungsgemäßen Verfahrens zum Zuweisen einer Steuerberechtigung zu einem Rechner.

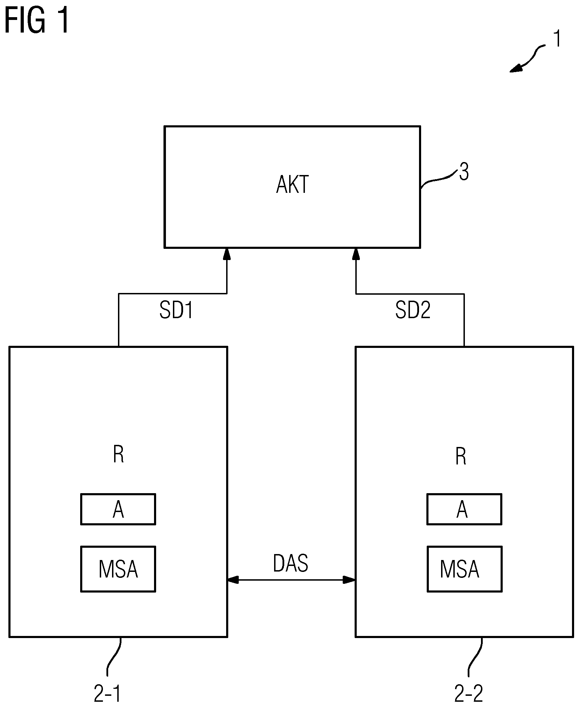

Wie man in Fig. 1 erkennen kann, umfasst ein erfindungsgemäßes System 1 bei dem dargestellten Ausführungsbeispiel mindestens zwei Rechner R, auf denen jeweils mindestens eine Applikation A ausgeführt werden kann. Diese Applikation A stellt Steuerdaten SD für mindestens eine Aktorik AKT des Systems 1 bereit. Bei dem in Fig. 1 dargestellten Ausführungsbeispiel weist das System 1 zwei asynchrone Rechner 2-1, 2-2 auf, die miteinander kommunizieren bzw. Daten miteinander austauschen. Die beiden Rechner 2-1, 2-2 tauschen über eine Datenschnittstelle in einem Datenaustausch DAS Zustandsdaten ZD und Leistungsdaten LD zyklisch miteinander aus. Der Datenaustausch erfolgt dabei periodisch, d.h. mit einem vorgegebenen konstanten Zeitabstand. Auf Basis der in dem Datenaustausch DAS von mindestens einem anderen Rechner erhaltenen Zustands- und Leistungsdaten $ZD_{Opp}$, $LD_{Opp}$ sowie auf Basis der eigenen Zustands- und Leistungsdaten $ZD_{Own}$, $LD_{Own}$ wird in einer auf dem Rechner R ausgeführten Master-Slave-Auswahl MSA ein von dem jeweiligen Rechner 2-i selbst einzunehmender Rechnerstatus als steuerberechtigter oder als nicht steuerberechtigter Rechner ermittelt. Bei dem in Fig. 1 dargestellten redundanten System 1 erzeugen beide Rechner 2-1, 2-2 Steuerdaten, jedoch nur der steuerberechtigte Rechner überträgt die Steuerdaten zu der Aktorik 3 zu deren Steuerung. Bei der Aktorik kann es sich um eine Systemkomponente, insbesondere eine sicherheitskritische Systemkomponente, handeln, beispielsweise die Fahrzeugbremseinheit eines Fahrzeugs. Die Steuerdaten können beispielsweise über einen Steuerdatenbus von dem steuerberechtigten Rechner zu der Aktorik 3 zu deren Steuerung übertragen werden.

Die ausgetauschten Zustandsdaten ZD eines Rechners weisen vorzugsweise Statusdaten des Rechners auf, die einen Rechnerstatus RS des jeweiligen Rechners 2-i angeben. Der Rechnerstatus eines Rechners weist dabei vorzugsweise einen Master-Rechnerstatus (M-RS) als steuerberechtigter Rechner, einen Slave-Rechnerstatus (S-RS) als nicht steuerberechtigter Rechner, und einen Masterintermediate-Rechnerstatus (MI-RS) als vorläufig steuerberechtigter Rechner auf. Bei dem erfindungsgemäßen System 1 wird eine eindeutige und damit sichere Zuweisung einer Steuerberechtigung SB zu einem Rechner 2-i zur Steuerung einer Aktorik 3 gewährleistet. Die Zuweisung der Zuständigkeit bzw. Steuerberechtigung erfolgt eindeutig bzw. konfliktfrei zwischen verschiedenen redundant vorgesehenen Rechnern 2-i des Systems 1. Zwischen der verschiedenen Rechner 2-i erfolgt eine Master-Slave-Auswahl MSA. Dieser Master-Slave-Mechanismus ist geeignet, in dem asynchronen System mit redundant ausgeführten Applikationen oder auch Partitionclustern PC Systemkonsistenz sicherzustellen. Bei dem in Fig. 1 dargestellten asynchronen System 1 arbeiten die Rechner 2-i bzw. ihre Applikationen A asynchron. Gegebenenfalls können beispielsweise während des Wechsels des Rechnerstatus für ein sehr kurzes Zeitfenster mehrere Rechner steuerberechtige bzw. nicht steuerberechtig sein.

Bei einer möglichen Ausführungsform des erfindungsgemäßen Systems ist jedem der redundant vorgesehenen Rechner des Systems 1 ein zugehöriges Zeitfenster ZF zugewiesen, in dem der jeweilige Rechner 2-i zur Vermeidung eines Master-Master-Konfliktes einen Masterintermediate-Rechnerstatus MI-RS einnimmt. Die den verschiedenen Rechnern 2-i dabei zugewiesenen Zeitfenster ZFi sind vorzugsweise für die verschiedenen Rechner 2-i des Systems 1 unterschiedlich. Bei Komponenten mit derselben Zykluszeit können Informationen bzw. Informationsdaten in demselben Zyklus i oder mit Zeitversatz in einem Zyklus ausgetauscht werden. Eine weitere Asynchronität ergibt sich aus einer Zeitdiskrepanz zwischen der Freischaltung zweier Energieversorgungseinheiten für die beiden Rechner 2-1, 2-2. Diese Asynchronität ergibt sich einerseits aus einer mechanisch bedingten zeitlichen Verschiebung oder einer Verzögerung in elektrisch angesteuerten Halbleiterschaltelementen in einem Schalter zur Freischaltung der Energieversorgung für den jeweiligen Rechner 2-i und andererseits aus der Dynamik des entsprechenden Bordnetzes bis hin zu den Energieversorgungssteckern der beiden asynchronen Rechner 2-1, 2-2.

Aufgrund der vorhandenen Asynchronitäten ergibt sich eine Zeitspanne $\Delta t$, in welcher die beiden Rechner 2-1, 2-2 ihre Master-Slave-Auswahlen MSA starten, d.h. die Zuweisung einer Steuerberechtigung für den jeweiligen Rechner. Die den Rechnern zugewiesenen Zeitfenster ZF sind vorzugsweise jeweils größer als eine Zeitspanne ZS, die durch eine Asynchronität bei der zyklischen Kommunikation der Rechner 2-i untereinander und/oder durch Asynchronität bei einem Startup der Rechner 2-i hervorgerufen wird. Für die beiden in Fig. 1 dargestellten Rechner 2-1, 2-2 des redundanten Systems 1 sind die zugewiesenen Zeitfenster ZF unterschiedlich eingestellt bzw. unterschiedlich lang zu wählen.

Es ergibt sich:

$\Delta t$ > Zeitspanne (Asynchronität der zyklischen Kommunikation) + Zeitspanne (typische Asynchronität bei Startup).

Ferner wird vorzugsweise eine Zeitdifferenz der beiden Zeitfenster ZF, die den zwei verschiedenen Rechnern 2-1, 2-2 zugewiesen sind, größer gewählt als eine Zeitspanne ZS, die für eine Datentransport-Rückantwort an den jeweiligen anderen Rechner erforderlich ist.

```
ABS (Δt (R_Own) - Δt (R_Opp)) > Zeitspanne (Datentransport-
Rückantwort an R_Opp.
```

Die beiden Rechner 2-1, 2-2 setzen sich beispielsweise im Falle eines Master-Master-Konflikts sofort auf einen Slave-Rechnerstatus.

Um die Zuständigkeit für die Steuerung der Aktorik 3 während des Betriebs zuzuweisen, läuft auf den beiden Rechnern 2-1, 2-2 jeweils ein Master-Slave-Algorithmus bzw. eine Master-Slave-Auswahl MSA ab. Dabei werden Zustandsdaten ZD über Zustände von Komponenten im System 1 sowie Leistungsdaten LD der Komponenten verarbeitet, die vorzugsweise in vorgelagerten Basisprozessen BP ermittelt und für die entsprechende Auswertung aufgegriffen werden. Nach erfolgter Master-Slave-Auswahl kann als Ergebnis feststehen, dass einem jeden der verschiedenen Rechner 2-1, 2-2 und dort wiederum einer oder jeder der dort ablaufenden Applikationen A lokal ein Master-Flag bzw. ein Slave-Flag vererbt ist.

Ein Flag gibt vorzugsweise an, ob der jeweilige Rechner 2-i der steuerberechtigte Rechner oder ein nicht steuerberechtigter Rechner hinsichtlich der Aktorik 3 ist. Die Aktorik 3 des Systems 1 erhält dann entweder Daten bzw. Steuerdaten SD1 vom Rechner 2-1 oder Steuerdaten SD2 vom Rechner 2-2, je nachdem, welcher der beiden Rechner 2-1, 2-2 das Master-Flag hat und somit hinsichtlich der Steuerung der Aktorik 3 zum aktuellen Master-Rechner geworden ist.

Die Aktorik 3 des Systems 1 selbst überprüft dabei in der Regel nicht mehr, ob die ankommenden Steuerdaten SD von einer Berechtigungsinstanz kommen. Die Aktorik 3 berücksichtigt in jedem Fall die bei ihr ankommenden Steuerdaten SD, d.h., sie wird in Abhängigkeit der erhaltenen Steuerdaten die ihr zukommende Funktion innerhalb des Systems 1 ausführen. Dies bietet den besonderen Vorteil, dass die Aktorik 3 des Systems 1 bei Verwendung des erfindungsgemäßen Verfahrens besonders einfach implementiert bzw. realisiert werden kann. Das heißt, der für die Aktorik 3 innerhalb des Systems 1 zu betreibende technische Aufwand wird bei Verwendung des erfindungsgemäßen Systems 1 bzw. des erfindungsgemäßen Verfahrens signifikant reduziert.

Für den Fall, dass an die Aktorik 3 nicht nur Steuerdaten SD von einem einzigen steuerberechtigten Rechner gesendet werden, kann in der Aktorik 3 eine Filterung der empfangenen Steuerdaten SD erfolgen. Wurden noch keine Steuerdaten SD von einem steuerberechtigten Rechner empfangen, so werden die Steuerdaten SD des ersten steuerberechtigten Rechners als Steuerdaten akzeptiert. Falls gegebenenfalls gleichzeitig zwei Rechner als steuerberechtigte Rechner auftreten, deren Daten zur selben Zeit von der Aktorik 3 empfangen werden, wird einer dieser beiden Rechner priorisiert. Die Priorisierung kann dabei beispielsweis basierend auf einer zuvor festgelegten Regel erfolgen. Im Falle dass bereits ein steuerberechtigter Rechner im der Aktorik 3 erkannt wurde und im Betrieb ein weiterer steuerberechtigten Rechner hinzukommt, können beispielsweise nur die Steuerungsdaten des ursprünglichen steuerberechtigten Rechners akzeptiert werden. Die Steuerungsdaten SD des neu hinzukommenden steuerberechtigten Rechners können in diesem Fall verworfen werden.

Bei dem in Fig. 1 dargestellten System handelt es sich um ein asynchrones redundantes System mit mindestens zwei unabhängig voneinander arbeitenden Rechnern 2-i. Jeder Rechner hat zu einem Zeitpunkt ti eine gewisse Sicht auf seine Umgebung bzw. auf Komponenten des Systems 1. Diese Sicht liegt bei einem anderen Rechner des Systems 1 zu einem Zeitpunkt ti $\pm$ Asynchronitätszeit vor. Bei dem erfindungsgemäßen System 1, welches das Steuerberechtigungsauswahlverfahren einsetzt, ist somit keine aufwendige Synchronisierung der Rechner 2-i untereinander erforderlich. Jeder Rechner nimmt seinen für ihn ermittelten Rechnerstatus RS erst nach Ablauf eines Bestätigungszeitraums ein.

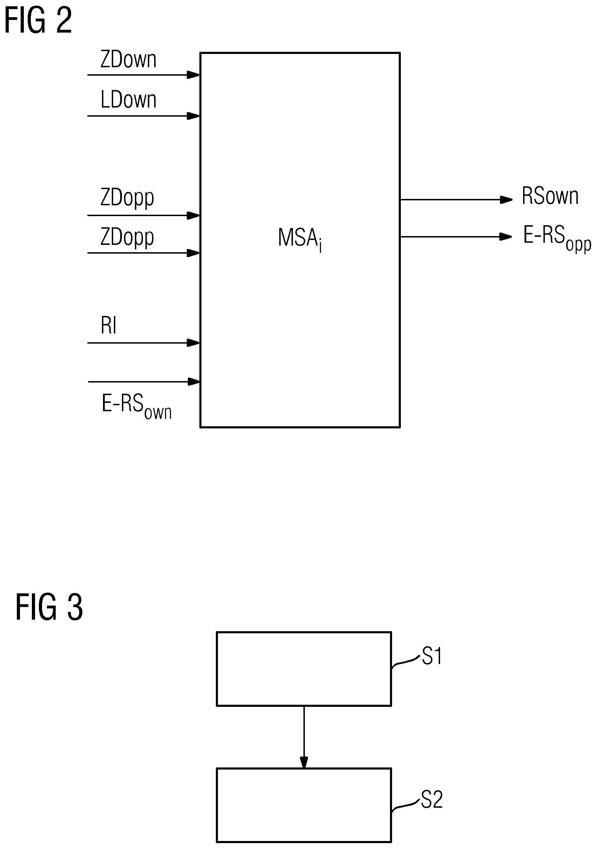

Jeder Rechner 2-i des Systems 1 ermittelt auf Basis der bei dem Datenaustausch DA mit anderen Rechnern erhaltenen Zustands- und Leistungsdaten $ZD_{Opp}$, $LD_{Opp}$ und auf Basis der eigenen Zustands- und Leistungsdaten $ZD_{Own}$, $LD_{Own}$ bei einem auf dem Rechner ausgeführten Master-Slave-Mechanismus MSA einen eigenen Rechnerstatus RS sowie einen Erwartungs-Rechnerstatus E-RS für mindestens einen anderen Rechner 2-i. Dies ist schematisch auch in Fig. 2 dargestellt. Das Master-Slave-Auswahlverfahren, welches auf einem Rechner i ausgeführt wird, ermittelt einerseits einen von dem jeweiligen Rechner R selbst einzunehmenden Rechnerstatus RS als steuerberechtigter oder als nicht steuerberechtigter Rechner sowie zusätzlich einen Erwartungs-Rechnerstatus E-RS für den jeweils anderen Rechner innerhalb des Systems 1. Dies geschieht dabei auf Basis der in dem Datenaustausch DAS mit mindestens einem anderen Rechner 2-i erhaltenen Zustands- und Leistungsdaten $ZD_{Opp}$, $LD_{Opp}$ und auf Basis der eigenen Zustands- und Leistungsdaten $ZD_{Own}$, $LD_{Own}$ des jeweiligen Rechners 2-i. Bei einer möglichen Ausführungsform erfolgt die Ermittlung des durch einen Rechner einzunehmenden Rechnerstatus zusätzlich in Abhängigkeit mindestens eines bei dem Rechner auftretenden Rechner-Interrupts RI, wie in Fig. 2 schematisch dargestellt. Bei diesem Rechner-Interrupt handelt es sich beispielsweise um einen Power-Interrupt für den betreffenden Rechner 2-i.

Weiterhin kann der Rechner 2-i des Systems 1 jeweils auf Basis von Zustands- und Leistungsdaten sowie auf Basis des von den übrigen Rechnern des Systems für den betreffenden Rechner 2-i ermittelten Erwartungs-Rechnerstatus E-RS einen durch den Rechner 2-i selbst einzunehmenden Rechnerstatus während der Master-Slave-Auswahl MSA ermitteln, wie ebenfalls in Fig. 2 schematisch angedeutet. Das in Fig. 2 dargestellte Master-Slave-Auswahlverfahren erfolgt auf allen asynchronen redundant vorgesehenen Rechnern 2-i des sicherheitskritischen Systems 1, wie es beispielhaft in Fig. 1 dargestellt ist. Das System 1 ist vorzugsweise ein redundantes sicherheitskritisches System, insbesondere ein verteiltes System, bei dem ausfallsicher Steuerdaten SD an mindestens eine Aktorik 3 des Systems 1 übertragen werden. Die Übertragung der Steuerdaten SD erfolgt ausgehend von dem dazu berechtigten Rechner 2-i des Systems 1.

Ein Rechner 2-i, der nach Ablauf seines Bestätigungszeitraumes den für ihn ermittelten Master-Rechnerstatus M-RS einnimmt, überträgt Steuerdaten SD zu der Aktorik 3 und behält seinen eingenommenen Master-Rechnerstatus so lange bei, bis die auf dem Rechner 2-i ausgeführte Master-Slave-Auswahl MSAi einen anderen Rechnerstatus RS für diesen Rechner 2-i ermittelt.

Ein Rechner 2-i, der einen Slave-Rechnerstatus S-RS eingenommen hat, wechselt von diesem eingenommenen Slave-Rechnerstatus in den Master-Rechnerstatus erst dann, wenn derjenige andere Rechner, der den Master-Rechnerstatus M-RS bisher eingenommen hat, einen anderen Rechnerstatus einnimmt und die auf dem betreffenden Rechner ausgeführte Master-Slave-Auswahl $MSA_i$ für den betreffenden Rechner 2-i einen Master-Rechnerstatus M-RS ermittelt hat.

Bei dem erfindungsgemäßen Verfahren zum Zuweisen einer Steuer- bzw. Übertragungsberechtigung bzw. einer Zuständigkeit in einem redundanten System 1, insbesondere ein aus mehreren Komponenten bestehendes redundantes System 1, erfolgt die Steuerung der Aktorik 3 durch genau einen dazu berechtigten Rechner 2-i des Systems 1. Dabei werden Zustands- und Leistungsdaten ZD, LD von Komponenten des Systems 1 aufgegriffen und verwertet. Auf Basis der ausgewerteten Daten bekommt genau eine Komponente bzw. Steuerkomponente, d.h. genau ein Rechner 2-i des Systems 1, die Berechtigung bzw. Zuständigkeit für die Steuerung der Aktorik 3 als Master zugewiesen. Dieser Master ist so lange als Master für die Steuerung der Aktorik 3 alleinig zuständig und bleibt es, bis die Master-Slave-Auswahl ihn zum Slave degradiert. Ein Slave bleibt so lange Slave und ist für die Steuerung der Aktorik 3 nicht zuständig und bleibt es, bis er zum Master erhoben wird. Weiterhin wird ein Slave erst dann zum Master, wenn ein Master sich zum Slave degradiert und sich der Slave als für die Steuerung der Aktorik 3 bereit erklärt.

Die zwischen den Rechnern 2-i ausgetauschten Zustandsdaten ZD umfassen Statusdaten der Rechner. Der Rechner kann vorzugsweise einen von drei verschiedenen Rechnerstatus RS einnehmen, nämlich einen Master-Rechnerstatus M-RS, einen Slave-Rechnerstatus S-RS und einen Masterintermediate-Rechnerstatus MI-RS. Der Status Masterintermediate MI-RS wird beispielsweise bei einem Startup des Rechners eingenommen. Der Status Masterintermediate bzw. Masterintermediate-Rechnerstatus MI-RS besagt, dass der jeweilige Rechner derzeit keinen anderen Rechner sieht, der einen Master-Rechnerstatus M-RS einnimmt. Der Masterintermediate-Rechnerstatus MI-RS kann gleichzeitig von mehreren Rechnern 2-i des Systems 1 für einen oder mehrere Zyklen eingenommen werden. Diese Rechner, welche einen Masterintermediate-Rechnerstatus MI-RS einnehmen, wirken während dieses Zeitraums auf die Aktorik 3 wie ein Master.

Die zwischen den Rechnern 2-i des Systems 1 ausgetauschten Zustandsdaten ZD umfassen den Rechnerstatus RS der jeweiligen Rechner. Die Zustandsdaten umfassen somit die Master-Slave-Information (Master, Slave, Intermediate) und können bei einer möglichen Ausführungsform weitere Daten enthalten, insbesondere Timeout-Verkürzungsanweisungen und sonstige Zustandsdaten. Neben den Zustandsdaten ZD werden zwischen den Rechnern 2-i auch Leistungsdaten LD ausgetauscht. Diese Leistungsdaten LD geben eine Leistung bzw. Leistungsfähigkeit bzw. ein Performance Level an. Dieses Performance Level ist beispielsweise als Skalar implementiert, beispielsweise in einem Wertebereich von 0 bis 9. Dieses Performance Level beschreibt vorzugsweise die Ausführungsgüte beispielsweise einer Applikation A oder eines mehrere Applikationen umfassenden Partitionclusters, welche eine Betrachtungseinheit BE bilden. Ein Rechner 2-i wird dabei vorzugsweise zum Master-Rechner erhoben bzw. erhält Master-Rechnerstatus M-RS, sobald der Rechner ein besseres bzw. höheres Performance Level bezüglich der jeweiligen Betrachtungseinheit (Applikation oder Partitioncluster) bereitstellen kann. Mit dem erfindungsgemäßen Verfahren wird neben dem Performance Level bzw. den Leistungsdaten LD auch der Zustand der Rechner bzw. die Zustandsdaten ZD berücksichtigt. Implizit gelingt mit dem erfindungsgemäßen Verfahren somit eine Priorisierung von Rechnern während verschiedener Betriebsphasen des Systems 1, insbesondere während eines Startups des Systems 1.

Für jeden Zustand eines Rechners 2-i des Systems 1 wird nicht nur geprüft, ob eine eigene Priorität bzw. das eigene Performance Level gleich ist, kleiner ist oder größer ist gegenüber einem anderen bzw. gegenüberliegenden (opposite) Rechner, sondern es wird vorzugsweise auch geprüft, welche Erwartung der gegenüberliegende Rechner 2-i des Systems 1 bezüglich der eigenen Priorität hat bzw. welchen Erwartungs-Rechnerstatus E-RS der andere Rechner 2-i für den betreffenden eigenen (own) Rechner ermittelt hat. Das heißt, bei einer möglichen Ausführungsform des erfindungsgemäßen Verfahrens wird zusätzlich berücksichtigt, ob der gegenüberliegende Rechner als Erwartungs-Rechnerstatus ermittelt hat, ob der betreffende Rechner einen Master-Rechnerstatus einnehmen soll oder nicht.

Die folgende Tabelle TAB zeigt eine mögliche Implementierung des erfindungsgemäßen Verfahrens und des erfindungsgemäßen Systems 1.

| ID | R(Own) Rolle | PL | E-RS | RI | Zyklus i R(Own) | | | Zyklus i R(Opp) | | | Zyklus i+1 R(Own) | | | | Strategie |
|---|---|---|---|---|---|---|---|---|---|---|---|---|---|---|---|
| | | | | | beMsStatusOwn | beMsStatusIntermediate | pcMsStatusOpp | beMsStatusOwn | beMsStatusIntermediate | | beMsStatusOwn | beMsStatusIntermediate | indicationMsTakeover_Fco | pcMsStatusOpp | |
| 1 | Slave | == | 0 | 0 | 0 | 0 | X | 0 | 0 | | 0 | 1 | 1 | 0 | Wechsel zu Master nach Ablauf des R-spezifischen Timers "indicationMsTakeover _Fco" |
| 2 | | | | | 0 | 0 | X | 1 | 0 | | 0 | 0 | 0 | 0 | |
| 3 | | | | | 0 | 0 | X | 0 | 1 | | 0 | 0 | 0 | 0 | |
| 4 | | | | 1 | 0 | 0 | X | 0 | 0 | | 1 | 0 | 0 | 0 | interrupt-Indiation ist gesetzt, nachdem das System mindestens einen Master hatte (Own oder Opp). Dadurch wird ein schnel- |

EP 3 143 506 B1

| Nr. | | | | | | | | | | | | | |
|---|---|---|---|---|---|---|---|---|---|---|---|---|---|
| | | | | | | | | | | | | | ler Master Takover ermöglicht, wenn gilt: > R(Opp) war Master > R(Opp) fällt aus > R(Own) hat bereits die geringste Prio |
| 5 | | | 1 | | 0 | 0 | x | 0 | 0 | | 1 | 0 | 0 | 0 | Sofern R(Opp) pcMsStatusOpp gesetzt hat erfolgt das Umschalten zum Master ohne Timeout. |
| 6 | Materinter-mediate | == | 0 | | 0 | 1 | x | 0 | 0 | | 0 | 1 | 1 | 0 | Wechsel zu Master nach Ablauf des R-spezifischen Timers "indicationMsTakeover_Fco" |
| 7 | | | | | 0 | 1 | x | 1 | 0 | | 0 | 0 | 0 | 0 | |
| 8 | | | | | 0 | 1 | x | 0 | 1 | | 0 | 1 | 1 | 0 | Der R mit kleinerer ID zieht sich zurück. |
| 9 | | | 1 | | 0 | 1 | x | 0 | 0 | | 1 | 0 | 0 | 0 | |
| 10 | Master | == | 0 | | 1 | 0 | x | 0 | 0 | | 1 | 0 | 0 | 0 | |
| 11 | | | | | 1 | 0 | x | 1 | 0 | | 0 | 0 | 0 | 0 | Rückzug |
| 12 | | | | | 1 | 0 | x | 0 | 1 | | 1 | 0 | 0 | 0 | Gemäß 7 zieht sich der |

| | | | | | | | | | | | | | | | |
|---|---|---|---|---|---|---|---|---|---|---|---|---|---|---|---|
| | | | | | | | | | | | | | | | Masterintermediate zurück. |
| 13 | | | 1 | | 1 | 0 | x | 0 | 0 | | 1 | 0 | 0 | 0 | |
| 14 | Slave | < | 0 | | 0 | 0 | x | 0 | 0 | | 0 | 0 | 0 | 1 | |
| 15 | | | | | 0 | 0 | x | 1 | 0 | | 0 | 0 | 0 | 1 | |
| 16 | | | | | 0 | 0 | x | 0 | 1 | | 0 | 0 | 0 | 1 | |
| 17 | | | 1 | | Dieses Szenario kommt nicht vor, da ein Ri den anderen Rj nur dann würdig bewertet, die Master-Rolle übernehmen zu dürfen, wenn Prio(Ri)>Prio(Rj). | | | | | | | | | | | |
| 18 | Materinter mediate | < | 0 | | 0 | 1 | x | 0 | 0 | | 0 | 0 | 0 | 1 | |
| 19 | | | | | 0 | 1 | x | 1 | 0 | | 0 | 0 | 0 | 1 | |
| 20 | | | | | 0 | 1 | x | 0 | 1 | | 0 | 0 | 0 | 1 | |
| 21 | | | 1 | | Dieses Szenario kommt nicht vor, da ein Ri den anderen Rj nur dann würdig bewertet, die Master-Rolle übernehmen zu dürfen, wenn Prio(Ri)>Prio(Rj). | | | | | | | | | | | |
| 22 | Master | < | 0 | | 1 | 0 | x | 0 | 0 | | 0 | 0 | 0 | 1 | |
| 23 | | | | | 1 | 0 | x | 1 | 0 | | 0 | 0 | 0 | 1 | |
| 24 | | | | | 1 | 0 | x | 0 | 1 | | 0 | 0 | 0 | 1 | |
| 25 | | | 1 | | Dieses Szenario kommt nicht vor, da ein Ri den anderen Rj nur dann würdig bewertet, die Master-Rolle übernehmen zu dürfen, wenn Prio(Ri)>Prio(Rj). | | | | | | | | | | | |

EP 3 143 506 B1

| 26 | Slave | > | 0 | | 0 | 0 | x | 0 | 0 | | 1 | 0 | 1 | 0 | Umschaltung zu Master nach R-spezifischem Timeout --> Relevant bei Ausfall des Master-R |
|---|---|---|---|---|---|---|---|---|---|---|---|---|---|---|---|
| 27 | | | | | 0 | 0 | x | 1 | 0 | | 0 | 0 | 0 | 0 | |
| 28 | | | | | 0 | 0 | x | 0 | 1 | | 0 | 0 | 0 | 0 | |
| | | | | | | | | | | | | | | | |
| 29 | | | 1 | | 0 | 0 | x | 0 | 0 | | 1 | 0 | 0 | 0 | Sofern R(Opp) pcMsStatusOpp gesetzt hat erfolgt das Umschalten zum Master ohne Timeout. |
| | | | | | | | | | | | | | | | |
| 30 | Masterinter-mediate | > | 0 | | 0 | 1 | x | 0 | 0 | | 0 | 1 | 1 | 0 | Wechsel zu Master nach Ablauf des R-spezifischen Timers "indicationMsTakeover _Fco" |
| 31 | | | | | 0 | 1 | x | 1 | 0 | | 0 | 0 | 0 | 1 | |
| 32 | | | | | 0 | 1 | x | 0 | 1 | | 0 | 0 | 0 | 1 | |
| | | | | | | | | | | | | | | | |
| 33 | | | 1 | | 0 | 1 | x | 0 | 0 | | 1 | 0 | 0 | 0 | Sofern R(Opp) pcMsStatusOpp gesetzt hat erfolgt das Umschalten zum Mas- |

EP 3 143 506 B1

| | | | | | | | | | | | | | | | |
|---|---|---|---|---|---|---|---|---|---|---|---|---|---|---|---|
| | | | | | | | | | | | | | | | ter ohne Timeout. |
| | | | | | | | | | | | | | | | |
| 34 | Master | > | 0 | | 1 | 0 | x | 0 | 0 | | 1 | 0 | 0 | 0 | |
| 35 | | | | | 1 | 0 | x | 1 | 0 | | 0 | 0 | 0 | 0 | Rückzug |
| 36 | | | | | 1 | 0 | x | 0 | 1 | | 1 | 0 | 0 | 0 | |
| | | | | | | | | | | | | | | | |
| 37 | | | 1 | | 1 | 0 | x | 0 | 0 | | 1 | 0 | 0 | 0 | Sofern R(Opp) pcMsStatusOpp gesetzt hat erfolgt das Umschalten zum Master ohne Timeout. |

Die in der Tabelle angegebene Implementierung bezieht sich auf ein System 1 mit zwei Rechnern 2-1, 2-2, wie es in Fig. 1 dargestellt ist. Die Tabelle kann als parametrisierte Lookup-Tabelle implementiert sein. Jeder Rechner verfügt über eine entsprechende Lookup-Tabelle. Die Parameter werden dabei durch einen Zählerstand zur Implementierung von Timeouts bzw. Zeitverzögerungen gebildet. Bei der in der Tabelle dargestellten beispielhaften Implementierung sind 37 mögliche Systemzustände für zwei Rechner in 37 Zeilen der Lookup-Tabelle dargestellt. Jeder der beiden Rechner 2-1, 2-2 nimmt eine Rolle als Slave-Rechner, Masterintermediate-Rechner oder Master-Rechner ein. Die von dem Master-Slave-Auswahlverfahren erzeugten Ausgangsdaten bzw. Flags werden während eines Zyklus i und eines Zyklus i+1 ausgegeben, wie in der Tabelle dargestellt.

Die erste Spalte der Tabelle gibt einen Identifizierer ID für die verschiedenen Systemzustände an.

Die zweite Spalte gibt die Rolle eines ersten Rechners 2-i innerhalb des Systems 1 an.

Die dritte Spalte zeigt die Priorität bzw. das Performance Level dieses Rechners 2-i im Vergleich zu einem anderen Rechner 2-2 des gleichen Systems 1. Dies bedeutet, dass das eigene (own) Performance Level des ersten Rechners 2-1 entweder gleich, kleiner oder größer ist als das Performance Level des gegenüberliegenden (opposite) anderen Rechners 2-2.

In der vierten Spalte wird der von dem anderen Rechner 2-2 ermittelte Erwartungs-Rechnerstatus E-RS dargestellt, d.h. der von dem zweiten Rechner 2-2 für den ersten Rechner 2-1 ermittelte Erwartungs-Rechnerstatus E-RS.

In der fünften Spalte der Tabelle wird eine Interrupt-Indikation angegeben, d.h., ob ein Rechner-Interrupt RI, insbesondere ein Power-Interrupt, für den Rechner vorliegt.

Bei der in der Tabelle dargestellten beispielhaften Implementierung kann der Erwartungs-Rechnerstatus E-RS den Wert 0 oder den Wert 1 einnehmen. 0 bedeutet, dass jeweils der andere Rechner bzw. der gegenüberliegende Rechner 2-2 der Meinung ist, dass der eigene erste Rechner 2-1 nicht Master ist. Umgekehrt bedeutet eine 1, dass der gegenüberliegende andere Rechner 2-2 der Meinung ist, dass der eigene erste Rechner 2-1 Master ist.

Die Interrupt-Indikation wird gesetzt, wenn ein Master ausgewählt und ein Vorgang gestartet worden ist. Dies kann beispielsweise als Erkennungszeichen dafür genutzt werden, ob ein Restart oder ein Startup des Rechners vorliegt. Im laufenden Betrieb eines Rechners innerhalb eines Systems 1 können beispielsweise sogenannte Power-Interrupts vorkommen, bei denen ein Rechner ausfällt und dann wieder hochfährt.

Die in der Tabelle angegebene Spalte "beMSStatusOwn" gibt an, dass der jeweilige Rechner Master ist. Die nächste Spalte "beMSStatusIntermediate" besagt, dass der Rechner einen Masterintermediate-Rechnerstatus MI-RS eingenommen hat. Die Spalte "pcMSStatusOpp" besagt, dass der gegenüberliegende andere Rechner (Opp-Rechner) Master-Rechner sein soll. Das eine in der Tabelle angegebene x-Zeichen besagt, dass eine Aussage an der betreffenden Stelle unerheblich ist.

Die Spalten bezüglich des Zyklus i zeigen das Speicher-Update bezüglich des Zyklus i. Die Spalten bezüglich des Zyklus i+1 zeigen das Speicher-Update bezüglich des Zyklus i+1, d.h. für den nächsten Zyklus des Systems 1.

Für die Berechnung der Ausgangsdaten bzw. Flags für den nächsten Zyklus i+1 betrachtet jeder Rechner 2-i für die Master-Slave-Auswahl MSA nicht den gegenüberliegenden anderen Rechner, sondern sich selbst. Der gegenüberliegende andere Rechner führt ebenfalls unabhängig davon ein Master-Slave-Auswahlverfahren MSA durch und entscheidet für sich selbst, welchen Status er einnimmt.

Werden von einem Rechner keine Daten von anderen Rechnern erhalten arbeitet das Master-Slave-Auswahlverfahren mit Vorgabe bzw. Default-Werten.

Beginnend bei Zeile 1 der Tabelle ergibt sich Folgendes. Ist der betreffende Rechner ein Slave-Rechner, d.h. nimmt einen Slave-Rechnerstatus S-RS ein, und hat die gleiche Priorität bzw. das gleiche Performance Level wie der gegenüberliegende andere Rechner, und erwartet der andere Rechner nicht, dass der betreffende Rechner Master-Rechner sein soll, und liegt ferner kein Rechner-Interrupt RI vor, setzt sich der betreffende Rechner, wie in Zeile 1 der Tabelle dargestellt, auf den Masterintermediate-Rechnerstatus MI-RS. Weiterhin setzt der Rechner eine Indikation für eine Handlungsübernahme. Wenn ein rechnerspezifischer Timer bzw. Zeitgeber abgelaufen (makeover) ist, der durch das Setzen der Indikation gestartet wird, d.h. nach einer vorgegebenen Anzahl von n Zyklen, wechselt dann der Rechner von dem Masterintermediate-Rechnerstatus MI-RS in den Master-Rechnerstatus M-RS.

Der Timer bzw. Zeitgeber misst eine Reaktionszeit. Diese Reaktionszeit wird vorzugsweise rechnerspezifisch eingestellt und ist vorzugsweise für jeden Rechner 2-i unterschiedlich.

Die in der Tabelle angegebenen Zeilen stellen Permutationen der möglichen Zustände und Berechnungen dar. Die einzelnen, in der Tabelle angegebenen Zeilen stellen keinen zeitlichen Ablauf dar. Es ist in der Regel so, dass beim Durchspielen von Übergangsszenarien beginnend von einer Ausgangssituation mit Ausgangszuständen zu einer Endsituation mit Ergebniszuständen über mehrere Zeilen der Tabelle gesprungen wird. Hierbei wird je Rechenzyklus eine Zeile bearbeitet.

Um eine maximal mögliche Funktionsgüte bzw. Performance-Güte ermitteln zu können, kann für jede Betrachtungseinheit BE, d.h. für jede Applikation oder jede aus mehreren Applikationen bestehende Partitioncluster PC eine Performance bzw. eine Leistungsfähigkeit zyklisch ermittelt werden. Diese Leistungsdaten LD tauschen die verschiedenen Rechner des Systems 1 zyklisch untereinander aus und können für sich so feststellen, welcher der Rechner in der Lage ist, für die betrachtete Einheit die beste Performance bereitzustellen.

Das Verfahren verfolgt während des zyklischen Betriebs folgende Strategie:

Ist der Rechner bezüglich der Betrachtungseinheit Master, so bleibt der Rechner so lange Master, bis er von sich selbst aus diese Master-Rolle bzw. diesen Master-Rechnerstatus abgibt.

Nehmen zwei Rechner gleichzeitig an der Master-Slave-Verteilung teil, so schaltet sich derjenige Rechner, welcher die Slave-Rolle innehat nur dann zum Master, wenn der bisherige Master seine Rolle abgegeben hat oder sich selbst in dem Master-Slave-Auswahlverfahren zum Slave-Rechner degradiert hat. Ein Master-Rechner verliert beispielsweise seine Master-Rolle dann, wenn er ausgefallen ist.

Das erfindungsgemäße Verfahren reduziert die Komplexität der Zuweisung von Zuständigkeit bzw. Steuerberechtigung erheblich.

Bei einer möglichen Ausführungsform erfolgt die Master-Slave-Auswahl MSA vorzugsweise durch ein entsprechendes Programm, das auf einem Mikroprozessor des Rechners 2-i ausgeführt wird. Jeder Rechner 2-i führt für sich selbst unabhängig von den anderen Rechnern eine derartige Master-Slave-Auswahl MSA aus. Die Master-Slave-Auswahl MSA; ist abhängig vom Rechnerstatus RS aller Rechner und von dem aktuellen Zustand der Rechner. Die implementierte Lookup-Tabelle zeigt die Funktionsweise, wenn beide Rechner operativ sind.

Mit dem erfindungsgemäßen Verfahren und dem erfindungsgemäßen System 1 werden Zeitfenster ZE, bei denen kein Rechner als Master Steuerdaten liefert, ausgeschlossen bzw. minimiert. Hierdurch wird die Stabilität des Systems und somit die Sicherheit erhöht.

Ein weiterer Vorteil des erfindungsgemäßen Systems 1 besteht darin, dass Umschalttransienten minimiert werden, d.h. wenn ein Rechner die Master-Rolle eingenommen hat, bleibt er so lange Master wie möglich. Hierdurch wird ebenfalls die Stabilität des Systems 1, insbesondere von Regelalgorithmen, erhöht, wodurch die Sicherheit innerhalb des Systems 1 gesteigert wird. Darüber hinaus stellt das erfindungsgemäße Verfahren und System 1 sicher, dass die Aktorik 3 des Systems 1 stets mit maximaler bzw. optimaler Performance gesteuert bzw. betrieben wird. Auch hierdurch wird die Betriebssicherheit des Systems 1 erhöht. Die von den Rechnern erzeugten Daten umfassen vorzugsweise Steuerdaten, insbesondere Sollwerte. Bei dem erfindungsgemäßen System 1 wird neben dem Master-Rechnerstatus und dem Slave-Rechnerstatus ein Masterintermediate-Rechnerstatus eingesetzt, welcher zur Abstimmung der Rechner untereinander dient und insbesondere auch Master-Master-Konflikte vermeidet oder minimiert. Hierdurch werden Zeitfenster, in denen kein Master-Rechner zur Verfügung steht, ausgeschlossen bzw. minimiert. Neben seinem eigenen Zustand berücksichtigt jeder Rechner die mit den anderen Rechnern ausgetauschten Leistungs- und Zustandsdaten. Vorzugsweise wird zusätzlich eine Erwartungshaltung der anderen Rechner bezüglich des von einem Rechner einzunehmenden Rechnerstatus mitberücksichtigt. Auch das Auftreten eines Interrupts wird vorzugsweise bei der Ermittlung des Rechnerstatus bzw. der Steuerberechtigung mitberücksichtigt.

Das erfindungsgemäße Verfahren und System 1 ist vielseitig einsetzbar, insbesondere bei sicherheitskritischen Systemen mit verteilten Rechnerstrukturen. Das erfindungsgemäße Verfahren und System 1 eignet sich beispielsweise für Industrie- bzw. Fertigungsanlagen und für Transporteinrichtungen, beispielsweise Züge oder Kraftfahrzeuge.

Bei einer möglichen Ausführungsform des erfindungsgemäßen Verfahrens können die Rechner verschiedene interne Zustände, beispielsweise DDC-Zustände (Duplex Control-Computerzustände) einnehmen. Diese Zustände umfassen beispielsweise "Bin aktiv", "Initialisiere mich gerade", "Stehe kurz davor, in vollem Umfang zur Verfügung zu stehen", "Stehe in vollem Umfang zur Verfügung", "Identifiziere gerade meine aktuelle Rolle im Gesamtsystem", "Halte meine Rolle als Master im Gesamtsystem aufrecht", "Nehme mich als Master zurück und werde Slave" usw.

Der steuerungsberechtigte Rechner ist in der Lage, die Aktorik 3 des Systems 1 zu steuern und ist in der Lage, sich mit den restlichen Rechnern bzw. dem übrigen System 1 darüber einig zu werden, wer letztlich die Aktorik 3 steuern soll. Wenn ein Rechner die Slave-Rolle innehat, berechnet er weiterhin die Steuerdaten SD für die Aktorik 3 und schreibt diese in einen internen Speicher. Solche Steuerdaten SD werden jedoch von einem Rechner, welcher den Slave-Rechnerstatus S-RS einnimmt, nicht an die Aktorik 3 weitergeleitet. Solange ein Rechner die Master-Rolle eingenommen hat und Master-Rechnerstatus M-RS besitzt, wird keine Steuerung der Aktorik 3 durch einen anderen Rechner erfolgen.

Wegen der vorhandenen und gewollten Asynchronität in dem System 1 wird zunächst berechnet, ob ein bestimmter Rechner innerhalb des Systems 1 die Master-Rolle einnehmen kann, wobei aber wegen der Asynchronität das entsprechende Ergebnis noch für weitere Zyklen innerhalb des Systems 1 unverändert vorliegen muss. Dies entspricht der Notwendigkeit eines Zeitbedarfs für eine Bestätigung, d.h., es wird ein Bestätigungszeitraum abgewartet. Eine solche Bestätigungszeit wird vorzugsweise bei allen relevanten Berechnungen mitberücksichtigt. Die Umschaltung eines Rechners erfolgt erst nach Ablauf dieses Bestätigungszeitraums.

Die Aktorik 3 bzw. der Aktor des Systems 1 wird von einer Applikation A eines Rechners angesteuert. Ein komplexes System 1 kann mehrere Aktoren beinhalten. In diesem Falle können die Steuerdaten SD auch von mehreren verschiedenen Applikationen bzw. einem Partitioncluster PC zusammen generiert werden.

**Patentansprüche**

1. System (1) mit zwei asynchronen Rechnern (2-i), auf denen jeweils mindestens eine Applikation (A) ausgeführt wird, die Steuerdaten (SD) für mindestens eine Aktorik (3) bereitstellt, wobei die bereitgestellten Steuerdaten (SD) von einem steuerberechtigten Rechner (2-i), der einen Master-Rechnerstatus (M-RS) einnimmt, zu der Aktorik (3) zu deren Steuerung übertragen werden,
   wobei die Rechner (2-i) des Systems (1) über eine Datenschnittstelle in einem Datenaustausch (DAS) Zustandsdaten (ZD) und Leistungsdaten (LD) zyklisch miteinander austauschen,
   wobei die Rechner (2-i) jeweils auf Basis der in dem Datenaustausch (DAS) von anderen Rechnern (2-j) erhaltenen Zustands- und Leistungsdaten ($ZD_{Opp}$, $LD_{Opp}$) und auf Basis der eigenen Zustands- und Leistungsdaten ($ZD_{Own}$, $LD_{Own}$) in einer auf dem Rechner (2-i) ausgeführten Master-Slave-Auswahl (MSA) einen von dem jeweiligen Rechner (2-i) selbst einzunehmenden Rechnerstatus (RS) als steuerberechtigter oder nicht steuerberechtigter Rechner (2-i) ermitteln,
   wobei die ausgetauschten Zustandsdaten (ZD) eines Rechners (2-i) Statusdaten des Rechners (2-i) aufweisen, die einen Rechnerstatus (RS) des Rechners angeben, und
   wobei der Rechnerstatus (RS) eines Rechners (2-i) aufweist:

   - einen Master-Rechnerstatus (M-RS) als steuerberechtigter Rechner,
   - einen Slave-Rechnerstatus (S-RS) als nicht steuerberechtigter Rechner, und

   einen Masterintermediate-Rechnerstatus (MI-RS) als noch steuerberechtigter Rechner undwobei jedem Rechner (2-i) des Systems (1) ein zugehöriges Zeitfenster (ZF) zugewiesen ist, in dem der Rechner (2-i) zur Vermeidung eines Master-Masterkonflikts einen Masterintermediate-Rechnerstatus (MI-RS) einnimmt,
   wobei die zugewiesenen Zeitfenster (ZF) für die verschiedenen Rechner (2-i) des Systems (1) unterschiedlich sind.

2. System nach Anspruch 1,
   wobei die den Rechnern (2-i) zugewiesenen Zeitfenster (ZF) jeweils größer sind als eine Zeitspanne (ZS), die durch die Asynchronität bei der zyklischen Kommunikation der Rechner (2-i) untereinander und/oder durch Asynchronität bei einem Startup der Rechner (2-i) hervorgerufen wird.

3. System nach Anspruch 1 oder 2,
   wobei eine Zeitdifferenz der beiden Zeitfenster (ZF), die zwei verschiedenen Rechnern (2-i, R-j) zugewiesen sind, größer ist als eine Zeitspanne (ZS), die für eine Datentransport-Rückantwort an den jeweils anderen Rechner erforderlich ist.

4. System nach einem der vorangehenden Ansprüche 1 bis 3, wobei ein Rechner (2-i) seinen für ihn ermittelten Rechnerstatus (RS) erst nach Ablauf eines Bestätigungszeitraumes einnimmt.

5. System nach einem der vorangehenden Ansprüche 1 bis 4, wobei jeder Rechner (2-i) des Systems (1) auf Basis der bei dem Datenaustausch (DAS) mit anderen Rechnern (2-j) erhaltenen Zustands- und Leistungsdaten ($ZD_{Opp}$, $LD_{Opp}$) und auf Basis der eigenen Zustands- und Leistungsdaten ($ZD_{Own}$, $LD_{Own}$) für die anderen Rechner (2-j) jeweils einen Erwartungs-Rechnerstatus (E-RS) ermittelt.

6. System nach Anspruch 5,
   wobei jeder Rechner (2-i) des Systems (1) jeweils auf Basis der Zustands- und Leistungsdaten ($ZD_{Own}$, $LD_{Own}$, $ZD_{Opp}$, $LD_{Opp}$) sowie auf Basis des von den übrigen Rechnern (R-j) für den betreffenden Rechner (2-i) ermittelten Erwartungs-Rechnerstatus (E-RS) einen durch den Rechner (2-i) selbst einzunehmenden Rechnerstatus (RS) bei der auf dem Rechner (2-i) ausgeführten Master-Slave-Auswahl (MSA) ermittelt.

7. System nach einem der vorangehenden Ansprüche 1 bis 6, wobei die Ermittlung des durch einen Rechner (2-i) einzunehmenden Rechnerstatus (RS) zusätzlich in Abhängigkeit mindestens eines bei dem Rechner (2-i) auftretenden Rechner-Interrupts (RI), insbesondere eines Power-Interrupts, erfolgt.

8. System nach einem der vorangehenden Ansprüche 1 bis 7, wobei das System (1) ein redundantes sicherheitskritisches System, insbesondere verteiltes System, ist, das ausfallsicher Steuerdaten (SD) an die mindestens eine Aktorik (AKT) überträgt.

9. System nach einem der vorangehenden Ansprüche 1 bis 8, wobei ein Rechner (2-i), der nach Ablauf seines Bestätigungszeitraums den für ihn ermittelten Master-Rechnerstatus (M-RS) einnimmt, Steuerdaten (SD) zu der Aktorik (3) überträgt und seinen eingenommenen Master-Rechnerstatus (M-RS) so lange beibehält, bis die auf dem Rechner (2-i) ausgeführte Master-Slave-Auswahl (MSA) einen anderen Rechnerstatus (RS) für diesen Rechner (2-i) ermittelt.

10. System nach einem der vorangehenden Ansprüche 1 bis 9, wobei ein Rechner (2-i), der einen Slave-Rechnerstatus (S-RS) eingenommen hat, von diesem eingenommenen Slave-Rechnerstatus (S-RS) in den Master-Rechnerstatus (M-RS) erst dann wechselt, wenn derjenige andere Rechner (2-j), der den Master-Rechnerstatus (M-RS) bisher eingenommen hat, einen anderen Rechnerstatus (RS) einnimmt und die auf dem betreffenden Rechner (2-i) ausgeführte Master-Slave-Auswahl (MSA) für den betreffenden Rechner (2-i) einen Master-Rechnerstatus (M-RS) ermittelt.

11. System nach einem der vorangehenden Ansprüche 1 bis 10, wobei die Zustandsdaten (ZD) eines Rechners (2-i) einen Zustand des Rechners (2-i) und die Leistungsdaten (LD) eine Performance der auf dem Rechner (2-i) zur Erzeugung der Steuerdaten (SD) mindestens einen ausgeführten Applikation (A) angeben.

12. Verfahren zum Zuweisen einer Steuerberechtigung zu einem von zwei asynchronen Rechnern eines Systems (1), wobei die Steuerberechtigung den Rechner (2) zur Steuerung einer Aktorik (3) berechtigt, mit den folgenden Schritten:

(a) Ermitteln (S1) für jeden Rechner (2-i) eines durch den jeweiligen Rechner (2-i) einzunehmenden Rechnerstatus (RS) durch eine auf dem jeweiligen Rechner (2-i) ausgeführte Master-Slave-Auswahl (MSA) auf Basis der bei einem Datenaustausch (DAS) von den anderen Rechnern (2-j) erhaltenen Zustands- und Leistungsdaten $(ZD_{Opp}, LD_{Opp})$ und auf Basis der eigenen Zustands- und Leistungsdaten $(ZD_{Own}, LD_{Own})$ des jeweiligen Rechners (2-i);
(b) Zuweisen (S2) der Steuerberechtigung zur Steuerung der Aktorik (3) zu demjenigen Rechner (2), für den in dessen Master-Slave-Auswahl (MSA) ein Master-Rechnerstatus (M-RS) ermittelt wird,

wobei die ausgetauschten Zustandsdaten (ZD) eines Rechners (2-i) Statusdaten des Rechners (2-i) aufweisen, die einen Rechnerstatus (RS) des Rechners angeben, und
wobei der Rechnerstatus (RS) eines Rechners (2-i) aufweist:

- einen Master-Rechnerstatus (M-RS) als steuerberechtigter Rechner,
- einen Slave-Rechnerstatus (S-RS) als nicht steuerberechtigter Rechner, und
- einen Masterintermediate-Rechnerstatus (MI-RS) als noch steuerberechtigter Rechner.

wobei jedem Rechner (2-i) des Systems (1) ein zugehöriges Zeitfenster (ZF) zugewiesen ist, in dem der Rechner (2-i) zur Vermeidung eines Master-Masterkonflikts einen Masterintermediate-Rechnerstatus (MI-RS) einnimmt, wobei die zugewiesenen Zeitfenster (ZF) für die verschiedenen Rechner (2-i) des Systems (1) unterschiedlich sind.

**Claims**

1. A system (1) having
two asynchronous computers (2-i), on each of which at least one application (A) is executed which provides control data (SD) for at least one actuator system (3), wherein the provided control data (SD) are transmitted from a control-authorized computer (2-i), which assumes a master computer status (M-RS), to the actuator system (3) for the control thereof,
wherein the computers (2-i) of the system (1) exchange state data (ZD) and performance data (LD) cyclically with one another via a data interface in a data exchange (DAS),
wherein the computers (2-i) each determine, on the basis of the state data $(ZD_{Opp})$ and performance data $(LD_{Opp})$ obtained from other computers (2-j) in the data exchange (DAS) and on the basis of their own state data $(ZD_{Own})$ and performance data $(LD_{Own})$, a computer status (RS) to be assumed by the respective computer (2-i) itself as a control-authorized or non-control-authorized computer (2-i), in a master-slave selection (MSA) executed on the computer (2-i),
wherein the exchanged state data (ZD) of a computer (2-i) have status data of the computer (2-i) which specify a computer status (RS) of the computer, and
wherein the computer status (RS) of a computer (2-i) has:

- a master computer status (M-RS) as a control-authorized computer,
- a slave computer status (S-RS) as a non-control-authorized computer, and

a master intermediate computer status (MI-RS) as a computer which is still control-authorized and wherein each computer (2-i) of the system (1) is assigned an associated time window (ZF) in which the computer (2-i) assumes a master intermediate computer status (MI-RS) in order to avoid a master-master conflict,
wherein the assigned time windows (ZF) are different for the various computers (2-i) of the system (1).

2.  System according to Claim 1,
wherein the time windows (ZF) which are assigned to the computers (2-i) are each larger than a time period (ZS) which is caused by the asynchronicity during the cyclical communication of the computers (2-i) with one another and/or by asynchronicity during a startup of the computers (2-i).

3.  System according to Claim 1 or 2,
wherein a time difference between the two time windows (ZF) which are assigned to two different computers (2-i, R-j) is greater than a time period (ZS) which is necessary for a data transfer reply to the respective other computer.

4.  System according to one of the preceding Claims 1 to 3, wherein a computer (2-i) does not assume the computer status (RS) determined for it until after expiry of a confirmation time period.

5.  System according to one of the preceding Claims 1 to 4, wherein each computer (2-i) of the system (1) determines in each case an expected computer status (E-RS) for other computers (2-j) on the basis of the state data ($ZD_{Opp}$) and performance data ($LD_{Opp}$) obtained during the data exchange (DAS) with the other computers (2-j) and on the basis of each computer's (2-i) own state data ($ZD_{Own}$) and performance data ($LD_{Own}$).

6.  System according to Claim 5,
wherein each computer (2-i) of the system (1) determines, in each case on the basis of the state data ($ZD_{Own}$, $ZD_{Opp}$) and performance data ($LD_{Own}$, $LD_{Opp}$) and on the basis of the expected computer status (E-RS) determined for the respective computer (2-i) by the other computers (R-j), a computer status (RS) which is to be assumed by the computer (2-i) itself, during the master-slave selection (MSA) which is executed on the computer (2-i) .

7.  System according to one of the preceding Claims 1 to 6, wherein the computer status (RS) which is to be assumed by a computer (2-i) is additionally determined as a function of at least one computer interrupt (RI), in particular a power interrupt, occurring at the computer (2-i).

8.  System according to one of the preceding Claims 1 to 7, wherein the system (1) is a redundant reliability-critical system, in particular distributed system, which transmits control data (SD) in a failsafe fashion to the at least one actuator system (AKT).

9.  System according to one of the preceding Claims 1 to 8, wherein a computer (2-i) which assumes, after expiry of the confirmation time period thereof, the master-computer status (M-RS) which is determined for it, transmits control data (SD) to the actuator system (3) and maintains its assumed master-computer status (M-RS) until the master-slave selection (MSA) executed on the computer (2-i) determines a different computer status (RS) for this computer (2-i).

10. System according to one of the preceding Claims 1 to 9, wherein a computer (2-i) which has assumed a slave computer status (S-RS) does not change from this assumed slave computer status (S-RS) into the master computer status (M-RS) until that other computer (2-j)which has hitherto assumed the master control status (M-RS) assumes a different computer status (RS), and the master-slave selection (MSA) executed on the respective computer (2-i) determines a master computer status (M-RS) for the respective computer (2-i).

11. System according to one of the preceding Claims 1 to 10, wherein the state data (ZD) of a computer (2-i) specify a state of the computer (2-i), and the performance data (LD) specify a performance of the at least one application (A) executed on the computer (2-i) in order to generate the control data (SD).

12. Method for assigning a control authorization to one of two asynchronous computers of a system (1), wherein the control authorization authorizes the computer (2) to control an actuator system (3),
having the following steps:

(a) determining (S1) for each computer (2-i) a computer status (RS) which is to be assumed by the respective computer (2-i), by means of a master-slave selection (MSA) executed on the respective computer (2-i), on the basis of the state data ($ZD_{Opp}$) and performance data ($LD_{Opp}$) obtained from the other computers (2-j) during a data exchange (DAS) and on the basis of the respective computer's (2-i) own state data ($ZD_{Own}$) and performance data ($LD_{Own}$);

(b) assigning (S2) the control authorization for controlling the actuator system (3) to that computer (2) for which a master-computer status (M-RS) is determined in master-slave selection (MSA) of said computer (2),

wherein the exchanged state data (ZD) of a computer (2-i) have status data of the computer (2-i) which specify a computer status (RS) of the computer, and

wherein the computer status (RS) of a computer (2-i) has:

- a master computer status (M-RS) as a control-authorized computer,
- a slave computer status (S-RS) as a non-control-authorized computer, and
- a master intermediate computer status (MI-RS) as a computer which is still control-authorized,

wherein each computer (2-i) of the system (1) is assigned an associated time window (ZF) in which the computer (2-i) assumes a master intermediate computer status (MI-RS) in order to avoid a master-master conflict, wherein the assigned time windows (ZF) are different for the various computers (2-i) of the system (1).

## Revendications

**1.** Système (1) avec deux ordinateurs asynchrones (2-i), sur lesquels est respectivement exécutée au moins une application (A), qui produit des données de commande (SD) pour au moins un système d'actionnement (3), dans lequel les données de commande (SD) produites sont transmises par un ordinateur (2-i) autorisé à commander, qui adopte un état d'ordinateur maître (M-RS), au système d'actionnement (3) pour leur commande,

dans lequel les ordinateurs (2-i) du système (1) échangent l'un avec l'autre de manière cyclique via une interface de données dans un échange de données (DAS) des données d'état (ZD) et des données de puissance (LD),

dans lequel les ordinateurs (2-i) déterminent respectivement sur la base des données d'état et de puissance ($ZD_{Opp}$, $LD_{Opp}$) reçues par d'autres ordinateurs (2-j) dans l'échange de données (DAS) et sur la base des données d'état et de puissance propres ($ZD_{Own}$, $LD_{Own}$) dans une sélection maître-esclave (MSA) exécutée sur l'ordinateur (2-i) un état d'ordinateur (RS) à adopter par l'ordinateur (2-i) respectif lui-même en tant qu'ordinateur (2-i) autorisé à commander ou non autorisé à commander,

dans lequel les données d'état (ZD) échangées d'un ordinateur (2-i) présentent des données d'état de l'ordinateur (2-i) qui indiquent un état d'ordinateur (RS) de l'ordinateur, et

dans lequel l'état d'ordinateur (RS) d'un ordinateur (2-i) présente :

- un état d'ordinateur maître (M-RS) en tant qu'ordinateur autorisé à commander,
- un état d'ordinateur esclave (S-RS) en tant qu'ordinateur non autorisé à commander, et

un état d'ordinateur maître intermédiaire (MI-RS) en tant qu'ordinateur encore autorisé à commander et, dans lequel à chaque ordinateur (2-i) du système (1) est attribué une fenêtre de temps (ZF) correspondante, dans laquelle l'ordinateur (2-i) adopte un état d'ordinateur maître intermédiaire (MI-RS) pour éviter un conflit maître-maître, dans lequel les fenêtres de temps (ZF) attribuées sont différentes pour les divers ordinateurs (2-i) du système (1).

**2.** Système selon la revendication 1,
dans lequel les fenêtres de temps (ZF) attribuées aux ordinateurs (2-i) sont respectivement plus grandes qu'un laps de temps (ZS) qui est généré par le biais de l'asynchronisme lors de la communication cyclique des ordinateurs (2-i) entre eux et/ou par le biais de l'asynchronisme lors d'un démarrage des ordinateurs (2-i).

**3.** Système selon la revendication 1 ou 2,
dans lequel une différence de temps des deux fenêtres de temps (ZF) qui sont attribuées aux deux ordinateurs divers (2-i, R-j) est plus grande qu'un laps de temps (ZS) qui est nécessaire pour une réponse de transport de données respectivement aux autres ordinateurs.

**4.** Système selon l'une des revendications précédentes 1 à 3, dans lequel un ordinateur (2-i) adopte son état d'ordinateur déterminé pour lui (RS) uniquement après l'écoulement d'une période de confirmation.

**5.** Système selon l'une des revendications précédentes 1 à 4, dans lequel chaque ordinateur (2-i) du système (1) détermine sur la base des données d'état et de puissance (ZD$_{Opp}$, LD$_{Opp}$) reçues lors de l'échange de données (DAS) avec d'autres ordinateurs (2-j) et sur la base des données d'état et de puissance propres (ZD$_{Own}$, LD$_{Own}$) pour les autres ordinateurs (2-j) respectivement un état d'ordinateur en attente (E-RS).

**6.** Système selon la revendication 5,
dans lequel chaque ordinateur (2-i) du système (1) détermine respectivement sur la base des données d'état et de puissance (ZD$_{Own}$, LD$_{Own}$, ZD$_{Opp}$, LD$_{Opp}$) ainsi que sur la base de l'état d'ordinateur en attente (E-RS) déterminé par les ordinateurs (R-j) restants pour l'ordinateur (2-i) concerné un état d'ordinateur en attente (RS) à adopter par le biais de l'ordinateur (2-i) lui-même lors de la sélection maître-esclave (MSA) exécutée sur l'ordinateur (2-i).

**7.** Système selon l'une des revendications précédentes 1 à 6, dans lequel la détermination de l'état d'ordinateur (RS) à adopter par le biais d'un ordinateur (2-i) est effectuée en outre en fonction d'au moins une interruption d'ordinateur (RI) survenant dans l'ordinateur (2-i), en particulier une interruption d'alimentation.

**8.** Système selon l'une des revendications précédentes 1 à 7, dans lequel le système (1) est un système redondant et critique en termes de sécurité, en particulier un système réparti, qui transmet des données de commande fiables (SD) à l'au moins un système d'actionnement (AKT).

**9.** Système selon l'une des revendications précédentes 1 à 8, dans lequel un ordinateur (2-i), qui adopte après l'écoulement de sa période de confirmation l'état d'ordinateur maître (M-RS) déterminé pour lui, transmet des données de commande (SD) au système d'actionnement (3) et conserve son état d'ordinateur maître (M-RS) adopté tant que la sélection maître-esclave (MSA) exécutée sur l'ordinateur (2-i) détermine un autre état d'ordinateur (RS) pour cet ordinateur (2-i).

**10.** Système selon l'une des revendications précédentes 1 à 9, dans lequel un ordinateur (2-i) qui a adopté un état d'ordinateur esclave (S-RS) ne passe de cet état d'ordinateur esclave (S-RS) adopté à l'état d'ordinateur maître (M-RS) que lorsque l'autre ordinateur (2-j) qui a adopté jusque-là l'état d'ordinateur maître (M-RS) adopte un autre état d'ordinateur (RS) et la sélection maître-esclave (MSA) exécutée sur l'ordinateur (2-i) concerné détermine un état d'ordinateur maître (M-RS) pour l'ordinateur (2-i) concerné.

**11.** Système selon l'une des revendications précédentes 1 à 10, dans lequel les données d'état (ZD) d'un ordinateur (2-i) indiquent un état de l'ordinateur (2-i) et les données de puissance (LD) indiquent une performance de l'au moins une application (A) exécutée sur l'ordinateur (2-i) pour la génération des données de commande (SD).

**12.** Procédé destiné à l'attribution d'une autorisation de commande à l'un de deux ordinateurs asynchrones d'un système (1), dans lequel l'autorisation de commande autorise l'ordinateur (2) à commander un système d'actionnement (3), avec les étapes suivantes :

  (a) détermination (S1) pour chaque ordinateur (2-i) d'un état d'ordinateur (RS) à adopter par le biais de l'ordinateur (2-i) respectif par le biais d'une sélection maître-esclave (MSA) exécutée sur l'ordinateur (2-i) respectif sur la base des données d'état et de puissance (ZD$_{Opp}$, LD$_{Opp}$) reçues par les autres ordinateurs (2-j) lors d'un échange de données (DAS) et sur la base des données d'état et de puissance propres (ZD$_{Own}$, LD$_{Own}$) de l'ordinateur (2-i) respectif ;
  (b) attribution (S2) de l'autorisation de commande destinée à la commande du système d'actionnement (3) à l'ordinateur (2) pour lequel dans sa sélection maître-esclave (MSA) un état d'ordinateur maître (M-RS) est déterminé,

dans lequel les données d'état (ZD) échangées d'un ordinateur (2-i) présentent des données d'état de l'ordinateur (2-i), qui indiquent un état d'ordinateur (RS) de l'ordinateur, et
dans lequel l'état d'ordinateur (RS) d'un ordinateur (2-i) présente :

  - un état d'ordinateur maître (M-RS) en tant qu'ordinateur autorisé à commander,
  - un état d'ordinateur esclave (S-RS) en tant qu'ordinateur non autorisé à commander, et
  - un état d'ordinateur maître intermédiaire (MI-RS) en tant qu'ordinateur encore autorisé à commander,

dans lequel à chaque ordinateur (2-i) du système (1) est attribuée une fenêtre de temps (ZF) correspondante, dans laquelle l'ordinateur (2-i) adopte un état d'ordinateur maître intermédiaire (MI-RS) pour éviter un conflit maître-maître, dans lequel les fenêtres de temps (ZF) adoptées sont différentes pour les divers ordinateurs (2-i) du système (1).

FIG 1

1

AKT

3

SD1

SD2

R

A

MSA

DAS

R

A

MSA

2-1

2-2

# FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2657797 A1
- US 5870301 A
- EP 1860564 A1
- US 2005097165 A1